(19)

Europäisches
Patentamt
European
Patent Office
Office européen
des brevets

(11) **EP 3 943 566 A1**

(12) **EUROPEAN PATENT APPLICATION**

(43) Date of publication:
**26.01.2022 Bulletin 2022/04**

(21) Application number: **20460031.6**

(22) Date of filing: **23.07.2020**

(51) International Patent Classification (IPC):
***C09J 123/22*** (2006.01)   ***C09J 153/00*** (2006.01)
***C08L 77/00*** (2006.01)   ***C08L 75/04*** (2006.01)

(52) Cooperative Patent Classification (CPC):
(C-Sets available)
**C09J 123/22; C09J 153/00**         (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **AIB Spólka z Ograniczona
odpowiedzialnoscia sp.k.
44-190 Knurów (PL)**

(72) Inventor: **Slaczka, Maciej
43-186 Orzesze (PL)**

(74) Representative: **Korbela, Anna
ul. Kilinskiego 30 lok. 2
42-202 Czestochowa (PL)**

(54) **SELF-ADHESIVE COMPOSITION**

(57)     The invention covers the self-adhesive compound with high vapour permeability at high relative humidity and low vapour permeability at low relative humidity, for application on non-wovens, films, laminates, membranes and other materials used as coverings, especially in construction industry. The compound consists of two basic components: in 2 to 80% (by weight) of hydrophobic polymer, and of filler with variable water vapour permeability completing the 100% (by weight) of the mass of the self-adhesive compound. The alternative composition contains:
- thermo-plastic hydrophobic polymer base, being 2 to 50% (by weight) of self-adhesive material,
- hydrophilic filler with variable permeability of water vapour depending on relative humidity: completion to 100% (by weight) of the self-adhesive compound,
- plasticizer, compatible with the polymer base: 0 to 50% (by weight) of the material, and
- hydrocarbon, or monomer resin, or colophony ester: 0 to 50% (by weight) of the self-adhesive.

    The composition of the compound may be supplemented with colorants or antioxidants, or other additional components, jointly not exceeding 10% by weight, whereas the share of a single additive is not more than 2% (by weight) of the self-adhesive compound. Usually, the polymer base is a block co-polymer, or contains a mer of polyisobutylene in its molecule, and the size of the grain of hydrophilic filler does not exceed 250 $\mu$m.

EP 3 943 566 A1

(52) Cooperative Patent Classification (CPC): (Cont.)

C-Sets
**C09J 123/22, C08L 75/04;**
**C09J 123/22, C08L 77/00;**
**C09J 153/00, C08L 75/04;**
**C09J 153/00, C08L 77/00**

**Description**

The object of the invention is the self-adhesive compound of high vapour permeability at high relative humidity and low vapour permeability at low relative humidity, used as a self-adhesive layer, especially a self-adhesive layer applied to non-woven fabrics, films, laminates, membranes and other materials used as coverings, especially these used in construction industry.

The vapour-permeable materials have various uses and are suitable for a big number of applications. Various self-adhesive materials are also well known and widely used.

There exists, for instance, a need to use layers with high vapour permeability in circumstances where it is necessary to eliminate the water vapour condensation resulting in liquefaction of vapour settling on the warmer side of the area where materials having different temperatures join each other.

Frequently it is important that the accumulated moisture should not damage not only the construction materials but also the products stored inside, as foodstuffs. Proper drainage of water vapour is indispensable to eliminate the hazard of decay of materials, emerging of fungi or moulds whose expansion moisture would encourage.

At the same time the vapour permeable construction roof coverings must be resistant against changing atmospheric conditions. They must not degrade under the impact of rain, wind, sunshine and water penetrating through the wall, both during the construction works and during the building operation.

Employment of membranes with variable diffusion resistance called active, or inteligent, vapour-insulations, prevents accumulation of water inside the building or between the layers of its construction.

That is why the majority of construction materials must feature adequate vapour permeability; optimally this parameter should vary accordingly with the relative air humidity.

Relative humidity describes the ratio between the partial pressure of the water vapour contained in the air and the saturation pressure over the flat surface of clean water, determining the maximum partial pressure of water vapour in a given temperature. The relative humidity is a numerical ratio and is contained in 0 to 1 bracket, often expressed as percentage (100% = 1). The relative humidity equaling 0 means dry air, while equaling 1 means air totally saturated with water vapour. At relative humidity equaling 1 the cooling of the air starts the liquefaction of the water vapour.

At present, due to the necessity of upgrading the construction processes, film tapes are also used, totally or partially covered with self-adhesive material.

The commonly used self-adhesive materials may be termed as: "vapour permeable" i.e. based on polymers with hydrophilic functional groups (acrylic, for instance), or "vapour tight" i.e. based on hydrophobic polymers (as styrene block copolymers).

There exists a variety of solutions of this kind relating to materials with variable water vapour permeability. For instance, from the American patent description No. US 5807630 a solution is known, named "Controlled permeability film". The invention describes a composition of a film with controlled permeability of oxygen and carbon dioxide. In this composition polyethylene is used as base polymer. The composition contains 50 - 99.995% (by weight) of polymer (from which the film may be obtained), and porous filler dispersed in it, with grain size bigger than the thickness of the film layer.

The filler may be a mineral one, as pumice, zeolite, coal, or a hydrophilic organic polymer, as vinyl polyalcohol or polyacrylamide.

From another American invention description, No. US 5932497, a solution is known named "Breathable elastic film and laminate". The invention describes the method of obtaining an elastic film with controlled vapour permeability, filled with a filler with grains size adequate for obtaining pores. To produce the micro-pores, the film is stretched in at least two directions. The material forming the film is - advantageously - a metallocene polyethylene filled with a filler such as calcium carbonate, within 10 - 50% (by weight) brackets.

In the American patent description, No. US 8524822, solution named "Vapor-permeable liquid-applied membrane" is described. The invention describes a composition impermeable for air and water, with low damp absorption and adjustable vapour permeability. The composition consists of an emulsion containing hydrophobic acrylic polymer (being 50 to 97% of dry mass weight), mineral filler (as, inter alia, chalk, talcum powder, silica, being 0 to 50% of dry mass weight), water (being 30 to 50% by weight) and at least one water-soluble polymer (being 3 to 17% of dry mass weight). The membrane is formed by drying of the emulsion applied to the surface.

From yet another application, No. US 2013295364, a solution is known named "Polyolefin based films with improved water vapor transmission rates". The object of the invention is a composition of a vapour-permeable membrane. The composition consists of 10% to 94% (by weight) of polyolefin polymer, of 1% to 30% (by weight) of hydrophilic polymer (as, for instance, polyethylene glycol, polyvinyl alcohol or thermoplastic polyurethane), of 30% to 75% (by weight) of hydrophilic filler (as calcium carbonate, kaolin, mica, talcum powder). The thickness of filler grain is smaller than the thickness of the film layer.

In turn, from the application No. US 6083613A a solution is known named "Sheet for protecting paint film". The object of the invention is a sheet for protecting the paint film, containing the multi-layer base containing a barrier layer for water or water vapour - as the topcoat, and water, or water vapour permeable layer as the bottom layer, plus a layer of PSA-type, 'everlasting' glue, applied to the sheet on the water/water vapour-permeable side.

In the American invention description, No. US 2006046005A1, a solution is described named "Coating for polymeric labels". The invention covers polymeric labels, and - more precisely - polymeric labels with a layer enabling their affixing to the bottles, containers and other surfaces, with the use of water-based glues.

The objective of the invention presented here is the development of a self-adhesive compound applied on the material with the aim to affect the vapour permeability of the composition depending on the relative humidity of the environment, and which, at the same time, will cause the decline of the vapour permeability at high relative humidity and will make it possible to keep relatively high vapour permeability at low relative humidity. It is planned to apply the developed compound to the material - non-wovens, for instance - subsequently used as a water resistant and insulation tape.

The essence of the developed invention i.e. the self-adhesive compound with high vapour permeability at high relative humidity and low vapour permeability at low relative humidity, for application of the compound to non-wovens, films, laminates, membranes, and other materials used as coverings, especially in construction works, is that the compound has the form of the paste and consists of thermo-plastic hydrophobic polymer base - in 10-60% (by weight); this hydrophobic polymer base is a block co-polymer, or contains a mer of polyisobutylene in its molecule; its bulk is a hydrophilic filler in the form of polyamide or polyurethane powder (or other polymer having similar properties); the mass of this filler characterized by variable water vapour permeability, completes the rest of the 100% of the weight of the self-adhesive compound.

It is admissible that the contents of compound is enriched with additives, as colorants, antioxidants or stabilizers or modifiers of surface tension, i.e. surfactants or antistatic additives or other improvers, jointly up to 10% by weight of the self-adhesive compound, whereby the share of a single additive may not be bigger than 2% (by weight) of the compound.

Favourably, the size of hydrophilic filler grain is not bigger than 250 $\mu$m.

Yet the essence of the self-adhesive compound with high vapour permeability at high relative humidity and low vapour permeability at low relative humidity, applied to non-wovens, films, laminates, membranes and other materials used as coverings (particularly in the construction industry) is that it consists of

- thermo-plastic hydrophobic polymer base being 2 to 50% (by weight) of the self-adhesive material, which hydrophobic polymer base is a block copolymer or contains a mer of polyisobutylene in its molecule,
- plasticizer, compatible with the polymer base, being 0 to 50% (by weight) of the material,
- hydrocarbon, or monomer resin, or resin of colophony ester, being 0 to 50% (by weight) of the self-adhesive material,
- hydrophilic filler in the form of polyamide or polyurethane powder, or of other polymer with similar properties; the filler characterized by variable water vapour permeability depending on relative humidity, completes the rest of the 100% of the weight of the self-adhesive compound.

Save for the hydrophilic filler, the components form one phase.

Similarly, in this case it is admissible that the contents of compound are enriched with additives, as colorants, antioxidants or stabilizers or modifiers of surface tension, i.e. surfactants or antistatic additives or other improvers, jointly up to 10% by weight of the self-adhesive compound, whereby the share of a single additive may not be bigger than 2% (weight) of the compound.

Favourably, the size of hydrophilic filler grain is not bigger than 250 $\mu$m.

Using the solution of the developed invention it is possible to eliminate one layer from the known solutions used to achieve the desired purpose. In typical solutions, a variable permeability film is applied on the carrier, and to make its application possible, a layer of binder is applied. The developed invention makes it possible to dispose of this layer as the developed compound having the desired properties, is a self-adhesive one.

So, in the developed solution, the layer of adhesive takes the function of the film.

The self-adhesive compound with high vapour permeability at high relative humidity and low vapour permeability at low relative humidity, is a composition of a self-adhesive being a polymer matrix and a filler with variable water vapour permeability depending on relative humidity.

To establish the quantity of substances used in the compound, the term "concentration percentage" is used, describing the fraction of the mass in form of percentage, i.e. informing of the proportions of masses of separate components of the developed compound.

It is a mass fraction - a ratio of mass of the component to the total mass of the compound (given in the same unit), expressed in form of percentage:

$$C_A = \frac{m_A}{m_A + m_{solution}} \times 100\%$$

where: $C_A$ is a mass concentration percentage of "A" component; $m_A$ is a mass of "A" component; $m$ is a mass of the compound (solution), so:

$$C_A = \frac{m_A}{m_{compound}} \times 100\%$$

Assuming that a given portion of the developed compound constitutes 100% (by weight) of it, the self-adhesive material being the object of the invention consists of:

- from 2 to 80 % (by weight) of hydrophobic polymer, and
- filler with variable water vapour permeability, being a completion to 100% (by weight) of mass.

To achieve the intended purpose it is sufficient that in a given portion of the developed compound just two basic components referred to above are present, but it is admissible that other (one or more) components are introduced, as colorants, antioxidants, stabilizers or modifiers of surface tension (surfactants), or antistatic additives or other improvers, jointly not exceeding:

- 10 % (by weight),
  whereby the share of a single additive may not be bigger than 2% (by weight) of the self-adhesive compound.

Furthermore, the portion of the developed compound may contain plasticizer, compatible with the polymer base, or hydrocarbon, or monomer resin, or colophony ester. Then, the self-adhesive compound consists of following, interconnected components:

- thermo-plastic hydrophobic polymer base being from 2 to 50% (by weight) of the self-adhesive material,
- hydrophilic filler with variable water vapour permeability depending on relative humidity, being a completion to 100% (by weight) of the self-adhesive compound mass,
- plasticizer, compatible with the polymer base, being 0 to 50% (by weight) of the material, and
- additionally, a hydrocarbon or monomer resin, or resin of colophony ester being 0 to 50% (by weight) of the self-adhesive material.

Similarly, it is admissible that in a given portion of the developed compound, another component (or components) are included, as colorants, anti-oxidizers, or surface tension stabilizers or modifiers, i.e. surfactants, or anti-static additives or other improvers, in joint quantity :

- up to 10 % by weight,
  whereas the share of a single additive is not more than 2% (by weight) of the self-adhesive compound.

The polymer base used in the given compound is - favourably - a block polymer, or contains a mer of isobutylene in its molecule (which it may replace totally).
The size of the grain of the hydrophilic filler with variable water vapour permeability does not exceed 250 micrometers ($\mu$m).
The composition described above displays adhesion to construction-site surfaces and other surfaces used in construction materials, especially to non-wovens, knitted fabrics, plaster, bricks, etc. The developed compound, when applied to the material, sticks to it. Together with the band-shaped carrier it forms a tape, as it sticks to the carrier and acquires the properties of a water resistant and insulating tape.

The developed invention has been illustrated with the EXAMPLES OF REALIZATION, describing specific quantities of the used substances and the result of use of the compound of which they are part.

The used powder is a functional filler and thanks to its variable permeability, the whole ready-made product also takes on this property.

The filler used is a polyamide or polyurethane powder (or other polymer with similar properties) which exhibits high water absorptivity.

The influence of the powder, or commonly - a polyamide filler - on the variation of the vapour permeability of the composite depending on the relative humidity of the environment is shown in the below table:

| | Example I, comparative | Example I, | Example II | Example II comparative | Example III, | Example IV |
|---|---|---|---|---|---|---|
| Self-adhesive glue base | Block co-polymer | Block co-polymer | Block co-polymer | Polyisobutylene | Polyisobutylene | Polyisobutylene |
| % (weight) of glue | 100 | 70 | 50 | 100 | 60 | 27,5 |
| % (weight) of powder | 0 | 30 | 50 | 0 | 40 | 62,5 |
| $s_d$(O/ 30% RH) | 10 | 18 | 17 | >50 | >50 | 25 |
| $s_d$ (50/93% RH) | 14 | 29 | 32 | >50 | 16 | 4 |

wherein:

coefficient $s_d$ -   is a diffusion resistance describing the material's ability to stop water vapour, showing how thick the air layer would have to be to display the same resistance against the water vapour as this shown by the membrane;

coefficient RH -   (*Relative humidity*) describes the humidity of the air defined as the percentage of maximum moisture content in the air, at given temperature.

The process of preparation of the described compounds is effected in the well-known manner. The example compounds were prepared using the sigma-type mixtruder. Sufficient quantity of the base of the self-adhesive glue (for instance: rubber glue on block polymer, or polyisobutylene, base) is put into the machine. Next, the adequate quantity of powder (polyamide powder, for instance) is added. The quantity of specific substances is given in each example. The glue base is plasticized in 60°C temperature, next the powder is gradually added. The mixing continues for 30 to 60 minutes. Using a hydraulic press, 0.2 mm thick film is formed, next applied to a vapour permeable bedding. Testing of vapour permeability of the mixtures was effected according to the standard. The values given in the above table were determined according to the PN-EN ISO 12572 standard.

The above examples prove the addition of a powder, especially the polyamide one, influences the vapour permeability of the obtained composition depending on the relative humidity of the environment. In case of mixtures made of vapour permeable glue (rubber glue, especially), the addition of the powder (polyamide powder, especially) results in reduction of vapour permeability at high relative humidity, and at the same time it allows to keep the relatively high vapour permeability at low relative humidity.

**Claims**

1. The self-adhesive compound with high vapour permeability at high relative humidity and low vapour permeability at low relative humidity, for application on non-wovens, films, laminates, membranes and other materials used as coverings, especially in construction industry, **characterized in that** it has a form of the paste, and consists of a thermo-plastic hydrophobic polymer base, in 10-60% (by weight) brackets, which hydrophobic polymer base is a block polymer or contains a mer of polyisobutylene in its molecule, and of hydrophilic filler in form of polyamide or polyurethane powder, or other polymer with similar properties, which filler displaying the variable water vapour permeability, completes the 100% of weight of the self-adhesive compound, whereby the self-adhesive compound contains additives, i.e. colorants or antioxidants, or surface tension stabilizers or modifiers, i.e. surfactants or anti-static additives, or other improvers, jointly up to 10% (by weight) of the self-adhesive compound, whereas the share of a single additive is not more than 2% (by weight) of the self-adhesive compound.

2. The self-adhesive compound, as per claim No. 1, **characterized in that** the size of the grain of the hydrophilic filler does not exceed 250 μm.

3. The self-adhesive compound with high vapour permeability at high relative humidity and low vapour permeability at low relative humidity, which compound is applied on non-wovens, films, laminates, membranes and other materials used as coverings, especially in construction industry, **characterized in that** it is composed of:

   - thermo-plastic hydrophobic polymer base, being 2 to 50% (by weight) of self-adhesive material, which hydrophobic polymer base is a block polymer or contains a mer of polyisobutylene in its molecule,
   - plasticizer, compatible with the polymer base, being 0 to 50% (by weight) of the material,
   - hydrocarbon, or monomer resin, or a resin of colophony ester, being 0 to 50% (by weight) of the self-adhesive material, and
   - hydrophilic filler with variable permeability of water vapour depending on relative humidity, in form of a polyamide or polyurethane powder, or powder of other polymer of similar properties, being a completion to 100% (by weight) of the self-adhesive compound,

   save for the hydrophilic filler, the components form one phase.

4. The self-adhesive compound, as per claim No. 3, **characterized in that** it contains additives, i.e. colorants or antioxidants, or surface tension stabilizers or modifiers, i.e. surfactants or anti-static additives or other improvers, jointly in the quantity up to 10% (by weight) of the self-adhesive compound, whereby the share of a single additive may not be bigger than 2% (by weight) of the self-adhesive compound.

5. The self-adhesive compound, as per claim No. 4, **characterized in that** the size of the grain of the hydrophilic filler does not exceed 250 μm.

Europäisches
Patentamt

European
Patent Office

Office européen
des brevets

## EUROPEAN SEARCH REPORT

**Application Number**

EP 20 46 0031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2015/095786 A1 (CERTAIN TEED CORP [US]) 25 June 2015 (2015-06-25) <br> * page 1, line 5 - line 7 * <br> * page 2, line 13 - line 16 * <br> * page 4, line 1 - line 4 * <br> * page 5, line 24 - line 30 * <br> ----- | 1-5 | INV. <br> C09J123/22 <br> C09J153/00 <br> C08L77/00 <br> C08L75/04 |
| A | US 2012/302698 A1 (DORN RAINER [DE] ET AL) 29 November 2012 (2012-11-29) <br> * paragraphs [0004], [0025] * <br> ----- | 1-5 | |
| A | US 2016/369493 A1 (RAIDT HEINZ-PETER [DE] ET AL) 22 December 2016 (2016-12-22) <br> * claim 1 * <br> * paragraphs [0002], [0087] - [0090] * <br> ----- | 1-5 | |
| A,D | US 2013/295364 A1 (SAAVEDRA JOSE V [US] ET AL) 7 November 2013 (2013-11-07) <br> * claim 1 * <br> * paragraphs [0001], [0010], [0011], [0028], [0031] * <br> ----- | 1-5 | |

|  |
|---|
| TECHNICAL FIELDS SEARCHED (IPC) |
| C09J <br> C08L |

The present search report has been drawn up for all claims

| Place of search | Date of completion of the search | Examiner |
|---|---|---|
| Munich | 7 December 2020 | van Bergen, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 46 0031

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2020

| Patent document cited in search report | Publication date | Patent family member(s) | Publication date |
|---|---|---|---|
| WO 2015095786 A1 | 25-06-2015 | AU 2014368964 A1 | 21-07-2016 |
| | | AU 2017228632 A1 | 05-10-2017 |
| | | CA 2934072 A1 | 25-06-2015 |
| | | JP 6273368 B2 | 31-01-2018 |
| | | JP 2017509724 A | 06-04-2017 |
| | | JP 2018087339 A | 07-06-2018 |
| | | JP 2020045487 A | 26-03-2020 |
| | | KR 20160096674 A | 16-08-2016 |
| | | KR 20180112870 A | 12-10-2018 |
| | | NZ 721664 A | 25-05-2018 |
| | | RU 2640544 C1 | 09-01-2018 |
| | | WO 2015095786 A1 | 25-06-2015 |
| | | ZA 201604400 B | 29-07-2020 |
| US 2012302698 A1 | 29-11-2012 | AT 13585 U1 | 15-04-2014 |
| | | CN 102782226 A | 14-11-2012 |
| | | DE 102010054110 A1 | 16-06-2011 |
| | | DE 202010017888 U1 | 30-01-2013 |
| | | DE 202010017934 U1 | 19-03-2013 |
| | | DK 2510166 T3 | 01-12-2014 |
| | | EP 2510166 A1 | 17-10-2012 |
| | | ES 2523738 T3 | 01-12-2014 |
| | | JP 5758401 B2 | 05-08-2015 |
| | | JP 2013513741 A | 22-04-2013 |
| | | KR 20120123041 A | 07-11-2012 |
| | | PL 2510166 T3 | 31-03-2015 |
| | | RU 2012126990 A | 20-01-2014 |
| | | US 2012302698 A1 | 29-11-2012 |
| | | WO 2011069672 A1 | 16-06-2011 |
| US 2016369493 A1 | 22-12-2016 | DE 102014008531 A1 | 13-08-2015 |
| | | EP 3105386 A1 | 21-12-2016 |
| | | RU 2639227 C1 | 20-12-2017 |
| | | US 2016369493 A1 | 22-12-2016 |
| | | WO 2015120974 A1 | 20-08-2015 |
| US 2013295364 A1 | 07-11-2013 | NONE | |

EPO FORM P0459

For more details about this annex : see Official Journal of the European Patent Office, No. 12/82

**EP 3 943 566 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5807630 A
- US 5932497 A
- US 8524822 B
- US 2013295364 A
- US 6083613 A
- US 2006046005 A1